# EUROPEAN PATENT APPLICATION

(11) **EP 4 831 817 A1**
(43) Date of publication of application: **28.10.2026**
(21) Application number: 26174443.7
(22) Date of filing: 24.04.2026
(51) Int. Cl.: G06F 13/12, G06F 13/38, G06F 13/40, H04L 12/46, H04L 45/00, H04L 45/50, H04L 45/302, H04L 47/11, H04L 47/24, H04L 47/31, H04L 47/33, H04L 47/35, H04L 47/80, H04L 47/2408, H04L 49/20, H04L 49/25, H04L 67/61, H04L 69/00, H04L 69/22, H04L 69/324

(54) **LAYER-TWO HEADER FOR PACKET TRANSPORT IN SWITCHING INTERCONNECT**

(30) Priority: 25.04.2025 US 202563794854 P; 13.06.2025 US 202563823615 P; 07.07.2025 US 202563839762 P; 04.03.2026 US 202619556425
(71) Applicant: Avago Technologies International Sales Pte. Limited, Singapore 768923 (SG)
(72) Inventor: KALKUNTE, Mohan, Irvine, 92618 (US); SCHRAMM, Karen Maria, Irvine, 92618 (US); SPADA, Eric John, Irvine, 92618 (US); VAIDYA, Niranjan, Irvine, 92618 (US); COX, Ian Bruce Bernard, Irvine, 92618 (US); GRISWOLD, Mark David, Irvine, 92618 (US); WINTERBLE, Scott, Irvine, 92618 (US); ELNATHAN, Nathan, Irvine, 92618 (US); OPSASNICK, Eugene N., Irvine, 92618 (US); TABATABAEE, Vahid, Irvine, 92618 (US)
(74) Representative: Dilg, Haeusler, Schindelmann Patentanwaltsgesellschaft mbH

(57) **Abstract**

A device (200) may include a network interface (212) configured to exchange Ethernet frames with an interconnection switch and circuitry (214,216) coupled to the network interface (212). The circuitry (214,216) may be configured to, for an Ethernet frame including a layer-two header and a payload, modify the layer-two header to include first information in a destination address field of the layer-two header. The first information may be addressing information used by the interconnection switch to forward the Ethernet frame. The circuitry (214,216) may be configured to transmit, via the network interface (212) to the interconnection switch, the Ethernet frame including the modified layer-two header.

## Description

### Field of the Disclosure

This disclosure generally relates to systems and methods for providing an Ethernet load store framework to provide low latency, high bandwidth connectivity for compute node scale up networks based on Ethernet.

### Background of the Disclosure

As workloads continue to expand in complexity in areas such as machine learning and AI (Artificial Intelligence) inference, the need for parallel processing power increases significantly.

### Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIGS. 1A and 1B are block diagrams depicting computing devices useful in connection with the methods and systems described herein, according to some embodiments.
FIG. 2 is an example network environment including an example Ethernet Load Store IP (ELSIP) system, according to some embodiments.
FIG. 3 is a block diagram of an example frame 300, according to some embodiments.
FIG. 4A is a diagram illustrating an example 2-byte format of a second header, according to some embodiments.
FIG. 4B is a diagram illustrating an example 3-byte format of a second header, according to some embodiments.
FIGS. 5 to 7 are examples of an Ethernet frame format, according to some embodiments.
FIG. 8 is an example embodiment of an AI Fabric Header (AFH) format, according to some embodiments.
FIG. 9 is a flow diagram showing an example process for exchanging Ethernet frames with an interconnection switch, according to some embodiments.

The details of various embodiments of the methods and systems are set forth in the accompanying drawings and the description below.

### Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: IEEE 802.1 standards and IEEE 802.3 standards, including but not limited to IEEE 802.1Q^{™}, IEEE 802.1AX^{™}, IEEE 802.1CB^{™}, IEEE 802.3ae^{™}, IEEE 802.3ba^{™}, IEEE 802.3bj^{™}, IEEE 802.3by^{™}, IEEE 802.3cd^{™}, and IEEE 802.3ck^{™} standards. Although this disclosure can reference aspects of these standard(s), the disclosure is in no way limited by these standard(s).

For purposes of reading the description of the various embodiments below, the following descriptions of the sections of the specification and their respective contents can be helpful:
a. Section A describes a network environment and computing environment which can be useful for practicing embodiments described herein; and
b. Section B describes embodiments of systems and methods for providing a scaled up Ethernet framework.

### A. Computing and Network Environment

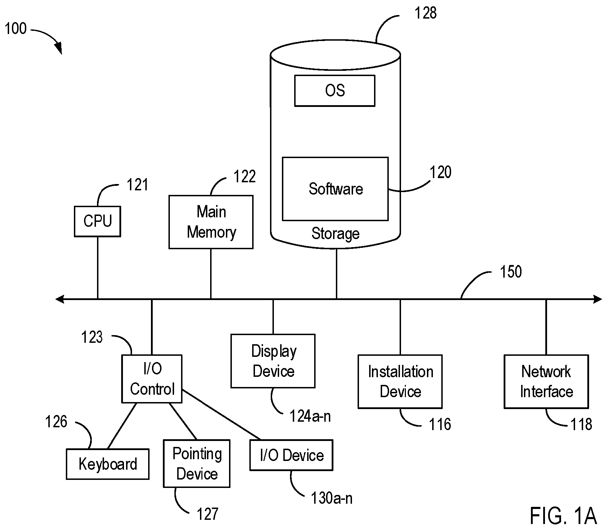

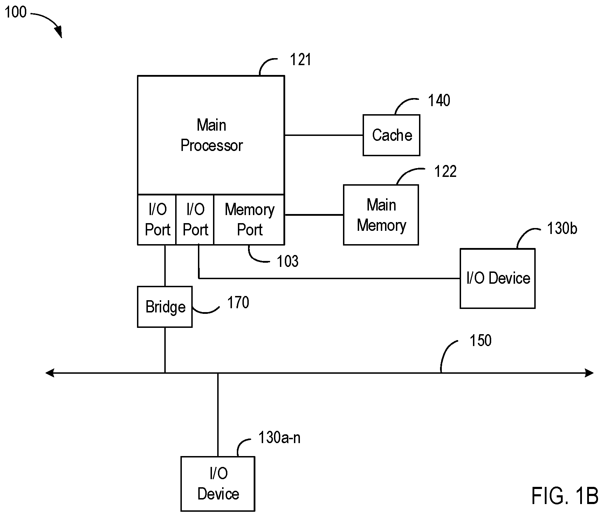

Prior to discussing specific embodiments of the present solution, it can be helpful to describe aspects of the operating environment as well as associated system components (e.g., hardware elements) in connection with the methods and systems described herein. FIGS. 1A and 1B depict block diagrams of a computing device 100 useful for practicing an embodiment of the techniques disclosed herein. As shown in FIGS. 1A and 1B, each computing device 100 includes a processor 121 (e.g., central processing unit), and a main memory unit 122. As shown in FIG. 1A, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1B, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1A, the processor 121 communicates with main memory unit 122 via a system bus 150 (described in more detail below). FIG. 1B depicts an embodiment of a computing device 100 in which the processor communicates directly with main memory unit 122 via a memory port 103. For example, in FIG. 1B the main memory unit 122 can be DRDRAM.

FIG. 1B depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1B, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1B depicts an embodiment of a computer or computer system100 in which the main processor 121 can communicate directly with I/O device 130b, for example via HYPERTRANSPORT, RAPIDIO, or INFINIBAND communications technology. FIG. 1B also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1A. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1A, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through high-speed wired connections, including but not limited to IEEE 802.3-compliant Ethernet links (e.g., 10GbE, 25GbE, 100GbE, 400GbE) over copper or optical fiber, and related IEEE 802.1 standards for bridging and traffic management. Connections can be established using a variety of communication protocols such as TCP/IP, Ethernet, SONET, SDH, or Fiber Distributed Data Interface (FDDI). In one embodiment, the computing device 100 communicates with other computing devices 100 via any type and/or form of gateway or tunneling protocol such as Secure Socket Layer (SSL) or Transport Layer Security (TLS). The network interface 118 can include a built-in network adapter, network interface card, or any other device suitable for interfacing the computing device 100 to a wired Ethernet network capable of performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1A and 1B can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, desktop computer, rack-mounted server, high-performance computing node, or other type and/or form of computing device that is capable of communicating over a wired Ethernet network. In some embodiments, the computing device 100 can have different processors, operating systems, and input/output configurations consistent with its role in a high-performance compute environment. For example, in one embodiment, the computing device 100 is a GPU/XPU-based accelerator node, an AI or machine learning server, or a data center compute appliance designed for operation within an Ethernet-connected cluster. Moreover, the computing device 100 can be any form of computing system that has sufficient processor power, memory capacity, and network interface capability to perform the operations described herein.

Aspects of the operating environments and components described above will become apparent in the context of the systems and methods disclosed herein.

### B. Systems And Methods For Providing A Scaled Up Ethernet Framework

As workloads in areas such as machine learning (ML), artificial intelligence (AI) inference, and data analytics grow in complexity and scale, the demand for parallel processing continues to rise. To meet this demand, GPUs (or more generically XPUs, to include various custom ML accelerators) are increasingly scaled to rack-level and multi-rack deployments. These systems rely on efficient interconnect fabrics to move large volumes of memory traffic with minimal latency and overhead. Ethernet offers compelling advantages for such fabrics, including high-speed links, high performance switches, a mature ecosystem, and operational familiarity. As a result, multiple industry initiatives are exploring Ethernet-based designs for AI-centric networks that extend or reuse components of Ethernet infrastructure.

While Ethernet provides a robust physical and link-layer foundation, its standard protocol stack introduces inefficiencies that hinder performance in latency-sensitive, high-throughput AI interconnects. In particular, the use of both L2 (MAC) and L3 (IP) headers introduces redundant information and protocol overhead that may exceed the payload size for many memory transactions. For example, small packets carrying 64-128 bytes of memory data may incur 34+ bytes of header overhead when including Ethernet, IP, and UDP headers. This severely limits efficiency and link utilization in AI workloads characterized by high rates of fine-grained memory operations. Additionally, L2/L3 header structures lack built-in support for forwarding features critical to AI fabrics, such as adaptive routing, congestion notification, and flow labeling.

To address these limitations, the present disclosure provides a technique for a compact and flexible AI Fabric Header (AFH). In some embodiments, the AFH overlays the L2 MAC header to eliminate redundancy with IP, while preserving features such as destination/source addressing, time-to-live (TTL), traffic class (e.g., DSCP), and explicit congestion notification (ECN). In some embodiments, optional extension fields in the AFH support additional functionality, such as adaptive routing eligibility and congestion signaling via congestion notification messages (CNMs). The AFH may reduce header overhead to as little as 14-18 bytes, based on configuration, which significantly improves efficiency for small packets. The AFH also allows the system designer full flexibility over address formatting and interpretation, and enables switches to parse, for example, only the necessary header fields for forwarding decisions. This enables Ethernet fabrics to emulate the behavior and performance of proprietary HPC interconnects, while remaining standards-based and vendor-neutral.

In some embodiments, a device may include circuitry configured to generate an Ethernet frame that includes the AFH, rather than a MAC+IP+UDP stack. The circuitry may populate the destination address (DA) field of the L2 header with fabric-level addressing information, while optional fields in the AFH extension may indicate per-packet routing behavior, such as whether the packet is eligible for adaptive routing or congestion notification. For instance, the circuitry may set a bit in the header to indicate the packet is a congestion control message or set a DSCP field to classify the packet for quality-of-service (QoS) handling in the switch. The AFH extension may also include a flow label to support route selection within the fabric. A network interface (e.g., a port macro) may transmit the frame to an interconnection switch (e.g., a fabric switch), which parses the relevant fields of the AFH and forwards the frame accordingly. In this manner, the technique disclosed herein enables high-efficiency memory transport across single-tier or multi-tier Ethernet fabrics using reduced-overhead, fabric-aware headers tailored for AI and ML workloads.

With the foregoing in mind, the figures and description below illustrate various examples of the techniques for layer-two header for packet transport in switching. The figures and description below are non-limiting examples and can be implemented as any of various other configurations while remaining within the scope of the present disclosure. Other embodiments can be used in addition or instead. Details that can be apparent to a person of ordinary skill in the art may be omitted. Some embodiments can be practiced with additional components or steps and/or without all of the components or steps that are described.

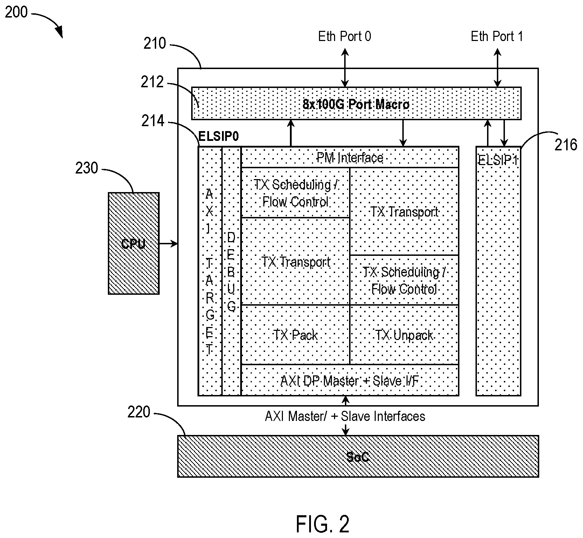

FIG. 2 is an example network environment 200 including an example Ethernet Load Store IP (ELSIP) system 210, according to some embodiments. The ELSIP system 210 may be a 400G scale-up network interface controller (NIC) that enables transport of memory read and write transactions between a plurality of endpoints (e.g., up to 128) over a high-throughput Ethernet interface. In the illustrated example, the ELSIP system 210 includes an 8×100G port macro 212, two Ethernet Load Store IP instances (ELSIPO 214 and ELSIP1 216). The ELSIP system 210 is communicatively coupled with a CPU 230, and a system-on-chip (SoC) 220 via an AXI-based master/slave interface.

The port macro 212 provides the physical and media access control (MAC) layers for multiple high-speed Ethernet ports (e.g., Eth Port 0 and Eth Port 1) and supports standard MAC/PCS interfaces. Each ELSIP 214, 216 implements transport logic for packetizing memory transactions into transport packets, which may contain zero or more memory commands and are protected by end-to-end integrity checks. The transport layer ensures ordered delivery of memory transactions per AXI channel between source and destination endpoints.

In some implementations, the ELSIP system 210 supports both standard and optimized packet delivery header formats. This allows the system to reduce protocol overhead when operating in optimized mode, while still enabling interoperability using standard formats if desired. Delivery headers are interpreted by intervening switches to route packets across the fabric toward their destinations.

Each ELSIP instance further supports multiple virtual channels (VCs) implemented via separate lossless flow control classes. These VCs provide deadlock avoidance and allow for performance isolation. The ELSIP system 210 supports link-level flow control mechanisms such as Priority Flow Control (PFC) and Unified Ethernet Congestion (UEC) Credit-Based Control per VC.

The ELSIP system 210 may optionally enable Link-Level Replay (LLR), which replays packets at the link layer in case of transmission failure. This reduces the burden on the ELSIP transport logic to handle retransmissions, thereby improving efficiency and reducing latency in many failure scenarios.

The CPU 230 may be used for configuration and management of the ELSIP instances, including flow control parameters, header format settings, and monitoring. The interface to the SoC 220 may be implemented as an AXI data-plane (DP) master/slave interface, enabling memory transactions to be issued from or written to system memory or other AXI-connected components.

In some embodiments, the ELSIP system 210 may include one or more integrated circuit blocks (e.g., ELSIP0 214 and ELSIP1 216) that implement the transport logic for transmitting and receiving Ethernet frames in accordance with the techniques described herein. Each ELSIP 214, 216 may include circuitry configured to format memory transactions as payloads, append transport-related headers (e.g., including flow control or congestion notification metadata), and construct Ethernet frames for transmission. The ELSIP 214, 216 may be coupled to the 8×100G Port Macro 212, which operates as a high-throughput network interface configured to exchange Ethernet frames with an external interconnection switch (e.g., a fabric switch in a scale-up AI cluster). For example, the Port Macro 212 may transmit and receive frames compliant with the Scale-Up Ethernet (SUE) format, including modified layer-two headers and one or more optional extension headers used by the interconnection switch to route and manage traffic.

Each ELSIP 214, 216 may include logic to process or generate portions of an Ethernet frame in a manner that supports adaptive routing and congestion-aware behavior. For instance, the circuitry may be configured to insert into the frame a second header that includes one or more fields such as adaptive routing eligible (AR) field, a Hop Count field, and/or an explicit congestion notification (ECN) field. In some embodiments, the second header may further include a differentiated services code point (DSCP) field used to indicate traffic class, and control bits indicating whether the packet is eligible for congestion and path failure notification or whether it is itself a notification. The values of these fields may be set by the ELSIP logic to guide switching behavior, for example, to signal eligibility for congestion response or to distinguish routing intent from standard IP semantics. Additionally, one or more ELSIP blocks may append flow label metadata that is usable by the switch to select a route dynamically. Once constructed, the Ethernet frame including the modified layer-two header and any second header is transmitted to the fabric switch via the Port Macro 212.

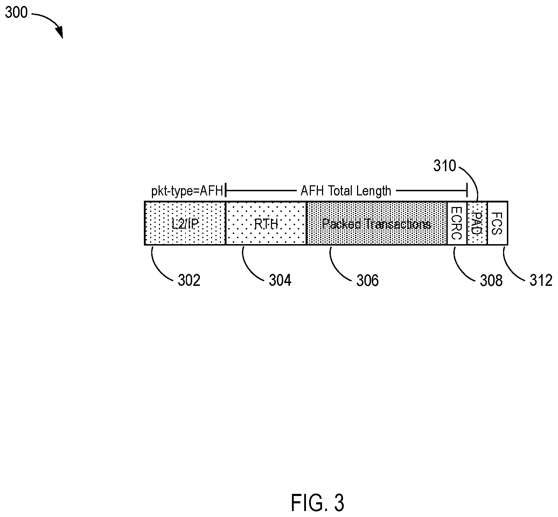

FIG. 3 is a block diagram of an example frame 300, according to some embodiments. The "frame" as used herein may refer to a data frame, a control frame, a management frame, or any signal, packet, segment, or a formatted unit of transmission that can be generated, processed, transmitted, and/or received to facilitate communication between devices over a wired medium (e.g., a wired Ethernet network). In some implementations, the frame 300 may be an Ethernet frame. The term "Ethernet frame" may refer to packets formatted in accordance with standard IEEE 802.3 Ethernet framing or modified Ethernet frames adapted for use in high-performance interconnects. In some embodiments, the Ethernet frames may include customized headers (e.g., AFH) and payloads including memory transactions or control information.

The frame 300 may include "fields" of Layer 2 header L2/IP 302, routing transport header (RTH) 304, Packed Transactions 306, error detection field for payload (ECRC) 308, padding for alignment (PAD) 310, and Ethernet frame check sequence (FCS) 312. The "field" as used herein may refer to a portion of a frame that occupies a defined bit range and carries control information, addressing information, payload data, or error-detection information used for processing, forwarding, or validating the frame.

The L2/IP 302 may include destination and source addressing information and may represent a standard Ethernet header, an IP header, or a compacted combination thereof. The RTH 304 may include routing-related information used by an interconnect switch to perform forwarding, congestion handling, or adaptive routing decisions within a fabric. The Packed Transactions 306 field may include one or more memory transactions, such as memory read or write operations, encapsulated within the frame payload. The ECRC 308 may include an end-to-end integrity check value computed over the packed transactions to enable detection of payload corruption. The PAD 310 may include unused bits or bytes added to satisfy alignment, sizing, or transmission requirements. The FCS 312 may include a cyclic redundancy check value used to detect transmission errors across the Ethernet frame. In some embodiments, the frame 300 may be transmitted via an Ethernet port (e.g., through the Port Macro 212) to a fabric switch, where the included headers, such as the L2/IP 302, are parsed to facilitate forwarding, congestion handling, and adaptive routing across the interconnect.

The frame 300 may be implemented by a device. The "device" as used herein may be a network interface controller (e.g., the ELSIP system 210), an XPU (e.g., a GPU or AI accelerator), or any system, circuitry, or integrated logic that transmits memory transactions over an Ethernet-based interconnection fabric. The device may include circuitry. As used herein, the "circuitry" may refer to hardwired circuitry, programmable circuitry, state machine logic, application-specific integrated circuits (ASICs), field-programmable gate arrays (FPGAs), digital logic, microcontrollers, processor cores, network interface controllers (NICs), or any combination thereof. In some embodiments, the circuitry may be implemented as part of a device that transmits Ethernet frames formatted in accordance with an AFH. The circuitry may be configured to generate and insert header fields, modify layer-two address fields, set congestion notification indicators, compute checksums or error detection codes, and/or transmit formatted frames over an Ethernet link to a fabric switch or interconnection device. The circuitry may be distributed across one or more blocks, including but not limited to an ELSIP block (e.g., ELSIP0 214 or ELSIP1 216), a control processor, or a port macro (e.g., Port Macro 212).

In some embodiments, the device includes a network interface configured to exchange Ethernet frames (e.g., the frame 300) with an interconnection switch. The term "network interface" as used herein may refer to physical-layer and/or link-layer interface circuitry that supports Ethernet communication, including but not limited to a Port Macro (e.g., the 8×100G Port Macro 212 of FIG. 2). The network interface may be operably coupled to one or more ELSIP blocks (e.g., ELSIP0 214, ELSIP1 216) to exchange frame sequences such as the frame 300 of FIG. 3 with an interconnection switch, such as a fabric switch within a GPU or XPU cluster. The term "interconnection switch" as used herein may refer to any device, logic, or network element that performs packet switching or forwarding operations across a network fabric. This may include a standalone fabric switch, a top-of-rack (ToR) switch, or an integrated switch block. The interconnection switch may operate based on Layer 2 (e.g., MAC address-based), Layer 3 (e.g., IP-based), or custom routing fields (e.g., flow labels or adaptive routing indicators). The interconnection switch may parse fields in the Ethernet frames to perform routing, congestion control, and switching operations within the scale-up Ethernet fabric.

In some embodiments, the circuitry is configured to modify a layer-two header of an Ethernet frame to include first information in a DA field of the layer-two header. The term "layer-two header" as used herein may refer to any data structure or field included at the beginning of an Ethernet frame that provides addressing and control information used for data link layer communication. The layer-two header may include one or more address fields (e.g., destination and source MAC addresses), a type/length field, or other control bits. In some implementations, the layer-two header may correspond to an Ethernet header or a customized format adapted for high-performance switching fabrics, such as an AFH. For example, the L2/IP 302 of the frame 300 may be a layer-two header and may contain a destination address field used by an interconnection switch to determine how to forward the Ethernet frame within a fabric.

The "destination address" (DA) field may refer to any portion of the layer-two header (e.g., the L2/IP 302) that encodes address information identifying a target destination within a switching fabric or interconnect network. In some embodiments, this may correspond to a 48-bit MAC address. In some other embodiments, the destination address field may be expanded, repurposed, or overloaded to carry addressing information specific to a high-speed AI interconnect fabric. For example, the DA field may encode logical routing identifiers, endpoint indexes, or path labels used by the interconnection switch to forward the frame toward its intended recipient. In these examples, the circuitry may access local configuration registers, receive flow control signals, and/or parse upper-layer headers to determine the appropriate value to insert into the destination address field. This enables the interconnection switch to perform fast lookup and forwarding based on the inserted addressing information.

As discussed above, the circuitry may be configured to modify the layer-two header to include the first information in a DA field of the layer-two header. The first information may include any addressing information used by the interconnection switch to forward the Ethernet frame. This may include a MAC address, a logical endpoint ID, a fabric path identifier, or a combination thereof. In some embodiments, the addressing information may be computed dynamically based on routing policies, flow rules, or endpoint discovery protocols. The circuitry may retrieve or compute this first information based on context associated with the memory transaction(s) carried in the frame payload, and may insert or overwrite the DA field of the layer-two header accordingly. This dynamic rewriting of the layer-two destination address field allows each Ethernet frame to be correctly routed through the interconnection fabric based on its transaction-level semantics or routing metadata.

In some embodiments, the circuitry may be configured to generate, as a portion of the Ethernet frame (e.g., the frame 300), a second header including one or more fields of an AR field, a TTL field, or an ECN field. As used herein, the term "second header" may refer to any set of fields or bit sequences appended to or embedded within an Ethernet frame (e.g., the frame 300) to enable extended routing, transport, or congestion control functionalities. The second header may be or be implemented, for example, in the routing transport header (RTH) 304 of the frame 300.

The AR field of the second header (e.g., the RTH 304) may include one or more bits that indicate to the interconnection switch whether to apply an adaptive routing strategy to the associated Ethernet frame. Adaptive routing, in these examples, may refer to the process by which the switch selects a path for the frame based on current network conditions, such as link utilization, congestion states, or fault status. The AR field may be used by the interconnection switch to make dynamic forwarding decisions to optimize bandwidth usage, reduce latency, or avoid congested links.

The TTL field of the second header (e.g., the RTH 304) may include an integer value that represents a hop count limit for the Ethernet frame (e.g., the frame 300). Each switch or routing device along the path may decrement the TTL value by one, and if the value reaches zero, the frame may be dropped. This mechanism can prevent looping or excessive propagation of stale frames in the fabric.

The ECN field of the second header (e.g., the RTH 304) may include one or more bits indicating whether the source and/or destination device is ECN-capable and whether the frame (e.g., the frame 300) has experienced congestion along its path. The ECN field may be used to signal congestion to endpoints without dropping frames, enabling proactive congestion control responses such as rate throttling or flow redirection. The ECN field may be interpreted by the interconnection switch to manage network traffic adaptively.

In some embodiments, the second header (e.g., the RTH 304) further includes a first field indicating eligibility of the Ethernet frame (e.g., the frame 300) for congestion notification, a DSCP field indicating a traffic class of the Ethernet frame, and a CNM field indicating to the interconnection switch whether the Ethernet frame (e.g., the frame 300) is a CNM. As used herein, the "first field" may refer to one or more bits or flags that indicate whether the Ethernet frame (e.g., the frame 300) is eligible to participate in congestion notification mechanisms within the fabric. This eligibility indication may be parsed by the interconnection switch to determine whether congestion-related markings or messages may be generated in response to detected congestion conditions.

The DSCP field may refer to a field including one or more bits that encode a priority, service level, or quality-of-service designation for the Ethernet frame. The DSCP field may indicate a traffic class, where the term "traffic class" as used herein may refer to a categorization of traffic used by the interconnection switch to apply differentiated handling, such as queue selection, scheduling priority, bandwidth allocation, or lossless versus lossy treatment. In some embodiments, the DSCP field may be included within the second header (e.g., the RTH 304 of FIG. 3) and may be interpreted by the interconnection switch independently of other header fields.

The CNM field may refer to one or more bits that indicate whether the Ethernet frame is itself a CNM. When the CNM field indicates that the Ethernet frame is a CNM, the interconnection switch may process, forward, or prioritize the frame according to congestion-notification handling rules defined for the fabric, rather than treating the frame as a regular data-bearing frame.

In some embodiments, the circuitry may be configured to set values to the first field indicating eligibility for congestion notification, the DSCP field, and the CNM field to indicate to the interconnection switch whether to send a CNM to a sender or a destination. As used herein, the term "sender" may refer to a device, endpoint, or source node that can transmit the Ethernet frame (e.g., the frame 300). The term "destination" may refer to a device, endpoint, or target node identified by addressing information in the frame (e.g., the frame 300), for example, via the destination address field of the layer-two header).

In some implementations, the circuitry may determine, based on local policy, congestion state, routing conditions, or header values associated with the Ethernet frame, whether congestion feedback should be directed back to the sender or forwarded toward the destination. The circuitry may then set corresponding values in the first field, the DSCP field, and the CNM field to encode this indication. For example, setting a particular value in the CNM field may indicate that the Ethernet frame itself is a CNM, while the combination of the first field and the DSCP field may further indicate the priority, handling class, or routing treatment associated with delivering the congestion notification.

The interconnection switch may parse the first field, the DSCP field, and the CNM field to determine whether to generate, forward, or relay a CNM and whether such notification should be delivered to the sender or to the destination. In this manner, the circuitry enables explicit control over congestion notification behavior at the Ethernet-frame level, allowing congestion feedback to be selectively targeted to the appropriate endpoint within the scale-up Ethernet fabric.

In some embodiments, the DSCP field included in the second header (e.g., the RTH 304) is defined and interpreted as being distinct from a DSCP field of an internet protocol header (e.g., treated by the interconnection switch). As used herein, the term "internet protocol header" may refer to any portion of a network-layer packet structure that conforms to a standardized or proprietary internet protocol format (e.g., IPv4, IPv6), and that includes addressing and control information such as source and destination IP addresses, version fields, header length, service type, total length, identification, fragmentation flags, TTL, protocol type, header checksum, and/or options. The internet protocol header may be associated with encapsulated transport-layer payloads (e.g., TCP, UDP) and may be used for routing packets across interconnected networks based on logical addressing. In some embodiments, the internet protocol header may be omitted, compressed, substituted, or bypassed in favor of alternative transport schemes (e.g., custom Layer 2 encapsulations such as the AFH).

In some embodiments, the circuitry may generate and populate the DSCP field in the second header (e.g., the RTH 304) independently of any DSCP field that may be present in an IP header or independently of whether an IP header is present at all. The interconnection switch may be configured to recognize that the DSCP field carried in the second header belongs to a separate namespace from IP-based DSCP fields and to apply traffic classification, queue selection, or congestion management decisions based on the second-header DSCP field rather than an IP-layer DSCP value.

By treating the DSCP field in the second header as distinct from a DSCP field of an internet protocol header, the interconnection switch can support fabric-specific traffic classes and policies without relying on Layer-3 semantics. This allows the Ethernet frame (e.g., the frame 300) to carry traffic class information optimized for scale-up Ethernet fabrics, memory-transaction traffic, or AI/XPU workloads, while avoiding ambiguity or conflict with DSCP values that may otherwise be associated with IP-based networking protocols.

In some embodiments, the second header (e.g., the RTH 304) includes a second field that indicates whether a flow label field is present in the Ethernet frame (e.g., the frame 300). The term "flow label field" as used herein may refer to a set of bits within a header (e.g., within the RTH 304) that identifies a particular flow or class of traffic for purposes of routing and traffic engineering across the interconnection fabric. The second field may be a flag bit, presence indicator, or control field used by the interconnection switch to determine whether to parse and use the flow label field for routing decisions.

The flow label field may include a value set, which may be or include one or more bits indicating a logical flow, route hint, priority path, or other forwarding classification. The term "value set" as used herein may refer to any code point, numeric value, tag, or encoded identifier that selects or influences a route through the interconnection switch. The term "route" as used herein may refer to a selected forwarding path or sequence of egress ports within the switching fabric used to deliver a packet from source to destination. The interconnection switch may use the value set in the flow label field to perform path selection, load balancing, or latency-aware routing based on dynamic topology or congestion state.

In some implementations, the flow label field may be implemented as part of the RTH 304 of the frame 300. For example, the RTH 304 may include one or more subfields dedicated to routing control, including the flow label field and the second field described above. The circuitry may be configured to generate and insert the second field and flow label field into the second header (e.g., the RTH 304) of the Ethernet frame (e.g., the frame 300) prior to transmission to the interconnection switch.

In some embodiments, the circuitry is configured to add, to the second header (e.g., the RTH 304), a flow label field and set the second field to a value indicating that the flow label field is present. The flow label field may include a value set to indicate to the interconnection switch a specific route or routing behavior. The flow label field may be implemented as a field or subfield within the routing transport header (e.g., the RTH 304 in FIG. 3), and may contain a value that enables per-flow or per-class routing decisions based on fabric topology, congestion state, or traffic engineering policies. The value set may include a tag, index, or path hint used by the interconnection switch to select among multiple available routes. The second field, which may be included in the RTH 304 or elsewhere in the second header, serves as an indicator to the interconnection switch that the flow label field is present and should be parsed during forwarding.

In some embodiments, the circuitry is configured to transmit, via the network interface, the Ethernet frame (e.g., the frame 300) including the modified layer-two header to an interconnection switch. As described above, the Ethernet frame (e.g., the frame 300) may include a layer-two header (e.g., the L2/IP 302), a second header (e.g., the RTH 304), and a payload (e.g., the Packed Transactions 306). The modified layer-two header may include a DA field updated with addressing information used by the interconnection switch to forward the frame across a fabric.

The network interface may include one or more Ethernet ports, physical coding sublayer (PCS) logic, media access control (MAC) logic, or serializer/deserializer (SerDes) circuits. It may support full-duplex or half-duplex transmission, and may be compatible with a variety of link speeds (e.g., 10G, 25G, 100G) and standards (e.g., IEEE 802.3, custom Ethernet variants). The network interface may be implemented within or alongside the ELSIP (e.g., ELSIP0 214 or ELSIP1 216) and may be directly coupled to a port macro such as Port Macro 212 of FIG. 2.

The interconnection switch may be a standalone or integrated switching fabric that routes Ethernet frames (e.g., the frame 300) among various endpoints (e.g., XPUs, memory devices, or other accelerators) within a scale-up or distributed system. When the Ethernet frame is transmitted, the interconnection switch may parse the headers, particularly the modified layer-two header, and perform actions such as forwarding, congestion response, or adaptive routing based on the embedded information.

In this way, the circuitry ensures that the formatted Ethernet frame, including a customized or modified layer-two header, is delivered to the interconnection switch to enable intelligent fabric-level forwarding and system-level scalability.

In some embodiments, the Ethernet frame 300 may include a fixed or variable-length header structure containing a set of defined fields. For example, Table 1 below illustrates an example set of fields that may be present in the second header (e.g., the RTH 304), along with corresponding bit-widths, functional descriptions, and whether the field is modifiable by a switch or intermediate network element.

**Table 1**

| Name | Size (Bits) | Description | Modified by Switch |
|---|---|---|---|
| AR | 1 | Adaptive Routing Eligibility | No |
| | | 0 = Deterministic routing based on entropy. Order of flow maintained. | |
| | | 1 = Adaptive at each hop, ordering not maintained. | |
| F | 1 | Flow label present | No |
| | | 0 = Not present, entropy calculation only uses SA, DA. Flex Header is 2B. | |
| | | 1 = Present, entropy calculation must use SA, DA, Flow label. Flex header is 3B. | |
| C | 1 | Eligible for CNM generation | No |
| | | 0 = Not eligible | |
| | | 1 = Packet is eligible for congestion notification. | |
| CNM | 1 | CNM from Switch | Yes |
| | | 0 = Packet is original data | |
| | | 1 = Packet is a CNM generated by switch. Can be sent to source or destination. | |
| ECN | 2 | 00 - Non-ECN-Capable Transport, Non-ECT | Yes |
| | | 10 - ECN Capable Transport, ECT(0) | |
| | | 01 - ECN Capable Transport, ECT(1) | |
| | | 11 - Congestion Encountered, CE. | |
| DSCP | 6 | DSCP code points identify traffic classes and VCs. DSCP encodings can be different from those used by IPv4/v6. | Yes |
| TTL | 4 | Time to Live field for packet, decremented by 1 for each switch. | Yes |
| | | Packet is either discarded or sent to the CPU when TTL == 0. | |

These fields may include, but are not limited to:
1) AR (Adaptive Routing Eligibility): A 1-bit field that indicates whether the frame is eligible for adaptive routing. A value of 0 may indicate that deterministic routing is used, preserving in-order delivery, while a value of 1 allows the frame to be routed adaptively at each hop, potentially improving congestion avoidance at the cost of packet ordering.
2) F (Flow Label Present): A 1-bit field indicating whether a flow label is included in the second header. When set to 0, the header may span 2 bytes and entropy calculations may use only the source and destination addresses. When set to 1, the header extends to 3 bytes and entropy-based routing may incorporate the flow label.
3) C (Congestion Eligibility): A 1-bit field specifying whether the frame is eligible for CNM generation. A value of 1 may mark the frame as eligible for being monitored for congestion conditions.
4) CNM (Congestion Notification Message): A 1-bit field that indicates whether the frame is a CNM itself (e.g., 1) or an original data frame (e.g., 0). A CNM frame may be generated by a switch in response to observed congestion or lack of a path to the destination and can be directed toward the original sender.
5) ECN (Explicit Congestion Notification): A 2-bit field used to convey congestion-related markings, consistent with ECN conventions. For example, values of 10 or 01 may indicate ECN-capable transport (ECT), and a value of 11 may indicate that congestion has been encountered (CE).
6) DSCP (Differentiated Services Code Point): A 6-bit field that encodes the traffic class or virtual channel associated with the frame. The DSCP encoding may be specific to the AI Fabric and need not match IP-based DSCP encodings.
7) TTL (Time to Live): A 4-bit field that is decremented by each switch the frame traverses. When the TTL reaches zero, the frame may be discarded or diverted for control-plane processing.

Each field may be parsed or modified by one or more switches along the fabric path, depending on whether the field is designated as switch-modifiable. In some implementations, certain fields such as CNM, ECN, DSCP, and TTL may be dynamically updated at runtime, while others such as AR or F may remain static throughout the frame's traversal.

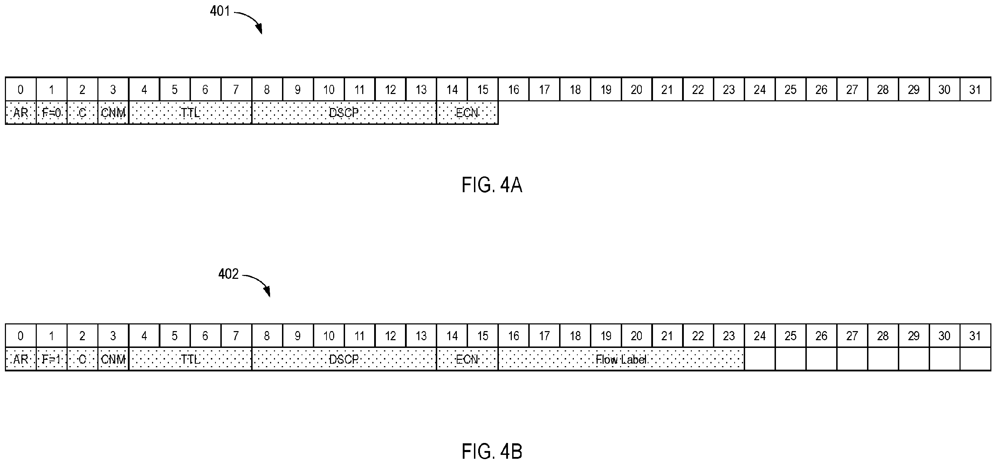

Example structures and field positions are shown in FIG. 4A and FIG. 4B. In particular, the 2-byte format (FIG. 4A) may be used when the flow label is not present, and the 3-byte format (FIG. 4B) may be used when the flow label is included.

FIG. 4A is a diagram illustrating an example 2-byte format of a second header 401, according to some embodiments. In some embodiments, the second header 401 may be or included in the RTH 304 of FIG. 3. The second header 401 may be generated by circuitry configured to insert routing- and congestion-related metadata into Ethernet frames, for example, within a high-performance interconnection fabric. The format illustrated in FIG. 4A corresponds to a case where the "flow label" field is not present (e.g., where field "F" is set to 0).

The first row of FIG. 4A represents bit positions from 0 to 31. The second row maps named fields to specific bit positions. As shown, the second header 401 includes a 1-bit AR field at bit position 0, a 1-bit flow label present (F) field set to 0 at bit position 1, a 1-bit congestion eligibility (C) field at bit position 2, and a 1-bit CNM field at bit position 3. A 4-bit TTL field occupies bits 4 to 7 and indicates the remaining lifetime of the packet as it traverses the interconnection network. A 6-bit DSCP field occupies bits 8 to 13 and encodes a traffic class. A 2-bit ECN field is located at bits 14 and 15 and encodes ECN-related status, such as congestion encountered or ECN-capable transport.

The second header 401 shown in FIG. 4A spans two bytes (16 bits), and may be located immediately following the layer-two header (e.g., the L2/IP 302 in FIG. 3) and before the payload (e.g., the packed transactions 306). The interconnection switch may parse one or more of the fields shown in FIG. 4A to perform adaptive routing, enforce time-to-live policies, generate or respond to congestion events, and/or perform class-based queuing or forwarding operations. In some embodiments, the second header 401 shown in FIG. 4A may be implemented within a custom header region such as an AFH. The remaining bits (16 to 31) may be reserved, unused, or used for other optional extensions.

FIG. 4B is a diagram illustrating an example 3-byte format of a second header 402, according to some embodiments. The second header 402 may be or included in the RTH 304. The format illustrated in FIG. 4B corresponds to a case where the "flow label" field is present (i.e., where field "F" is set to 1), and therefore includes an extended field layout (e.g., compared to FIG. 4A). As shown, the second header 402 of FIG. 4B includes an additional 8-bit flow label field spanning bits 16 to 23. The remaining bits (24 to 31) may be reserved, unused, or used for other optional extensions.

The inclusion of the flow label field allows for enhanced routing capabilities. Specifically, the flow label field can carry a pre-determined value used by the interconnection switch to perform entropy-based or deterministic routing decisions across the fabric. The presence of this field is indicated by setting the F field to 1. When present, the entropy calculation for forwarding the frame may incorporate not only source and destination addresses, but also the flow label.

In some embodiments, the second header illustrated in FIG. 4B may also be located between the layer-two header (e.g., the L2/IP 302) and the payload (e.g., packed transactions 306) of the Ethernet frame 300 shown in FIG. 3. This second header 402 may form a portion of an AFH, which enables fine-grained control over routing behavior, congestion response, and traffic classification in AI/GPU scale-up networks.

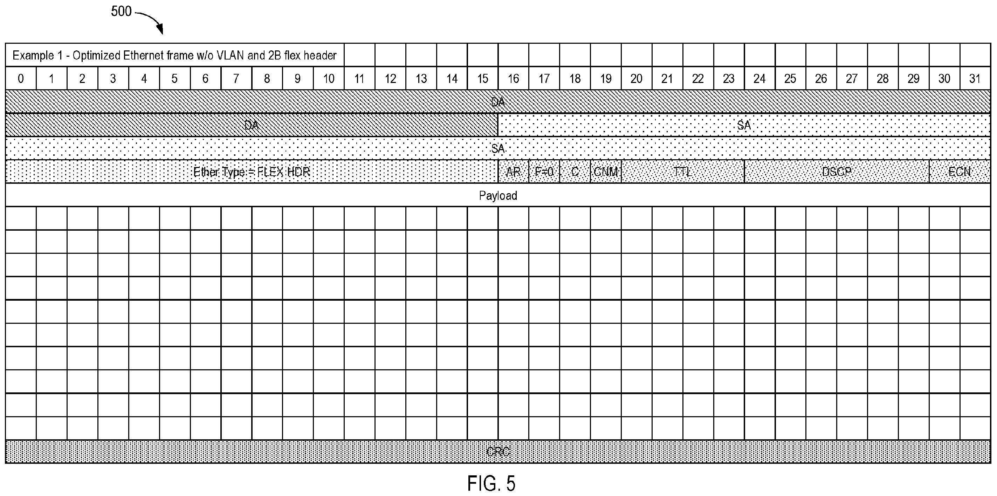

FIG. 5 is an example of an Ethernet frame format 500, according to some embodiments. This format 500 includes a 2-byte flexible header to support AI-scale Ethernet transport. As shown, the format 500 may be organized into seven 32-bit words representing portions of the Ethernet frame. The first and second 32-bit words define the DA and source address (SA) fields, which span 32 bits each. The DA occupies all 32 bits of the first word and the upper 16 bits (bit positions 0 to 15) of the second word. The SA spans the lower 16 bits (bit positions 16 to 31) of the second word and the entire third word (bit positions 0 to 31). These address fields correspond to the layer-two header (e.g., L2/IP 302 in FIG. 3) and enable standard or modified MAC-level forwarding by the interconnection switch.

In the fourth 32-bit word, an EtherType field identifying the presence of a flexible header is encoded in bit positions 0 to 15. The remaining bits of this word define the compact 2-byte flexible header used for in-network processing. Specifically, bit 16 stores the AR flag; bit 17 stores the F flag, which is set to 0 to indicate that the flow label field is not present (e.g., 2-byte flexible header format); bit 18 stores the C flag indicating eligibility for CNM generation; and bit 19 stores the CNM flag, which may be asserted by a switch to indicate that the frame is a CNM. Bits 20 to 23 contain the TTL field for hop-limit control; bits 24 to 29 contain the DSCP field representing a traffic class; and bits 30 to 31 encode the ECN field. These fields may collectively correspond to the second header described above (e.g., RTH 304 in FIG. 3) and align with the layout, for example, shown in FIG. 4A (where F = 0). The fifth and sixth words contain the payload and CRC, respectively, completing the optimized frame structure suitable for deployment in AI fabric switching environments.

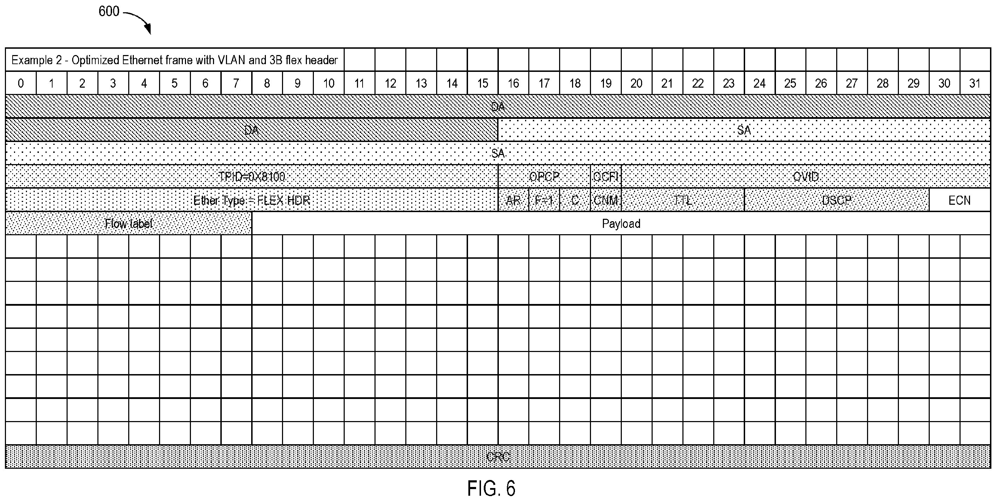

FIG. 6 is an example of an Ethernet frame format 600, according to some embodiments. This format 600 includes a 3-byte flexible header to support AI-scale Ethernet transport. The DA spans the first word (bits 0 to 31) and the lower half of the second word (bits 0 to 15), while the SA occupies the upper half of the second word (bits 16 to 31) and the full third word (bits 0 to 31). These MAC address fields correspond to the layer-two header (e.g., L2/IP 302 in FIG. 3) and support address-based forwarding by an interconnection switch.

The fourth word contains VLAN-specific fields. Bits 0 to 15 encode the tag protocol identifier (TPID), which is set to 0×8100 to indicate the presence of IEEE 802.1Q VLAN tagging. Bits 16 to 18 store the priority code point (OPCP), bit 19 stores the canonical format indicator (OCFI), and bits 20 to 31 encode the VLAN identifier (OVID). This layout ensures compatibility with VLAN-aware Ethernet infrastructure.

The fifth word begins with the EtherType field (bits 0 to 15), which signals the start of the flexible header. The remaining bits of this word (bits 16 to 31) form the 2-byte portion of the flexible header, including: the AR bit at bit 16, the F bit set to 1 at bit 17 (indicating a flow label is present), the congestion eligibility (C) bit at bit 18, the CNM bit at bit 19, the TTL field spanning bits 20 to 23, the DSCP field spanning bits 24 to 29, and the ECN field in bits 30 to 31. This layout is consistent with FIG. 4B, which defines the 3-byte flexible header format.

The sixth word begins with the flow label field in bits 0 to 7, for entropy-aware routing or deterministic path selection. The remaining bits of this word (bits 8 to 31) represent the beginning of the payload. The seventh word contains the CRC field for error checking and frame validation. This optimized frame format provides VLAN compatibility while supporting programmable routing and congestion-handling mechanisms within Ethernet switching fabrics at AI and high-performance scale.

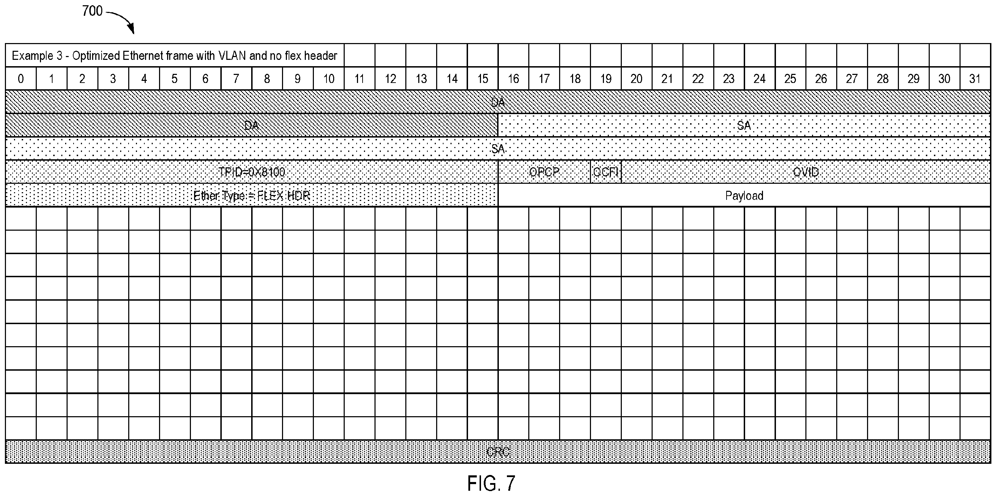

FIG. 7 is an example of an Ethernet frame format 700, according to some embodiments. The format 700 includes VLAN tagging but omits the flexible header. This frame structure includes seven 32-bit words and is useful for deployments that support VLAN-based segmentation but do not require the advanced routing or congestion control features provided by the flexible header formats.

The DA spans the second word (bits 0 to 31) and the lower half of the third word (bits 0 to 15), while the SA occupies the upper half of the second word (bits 16 to 31) and the full third word (bits 0 to 31). These address fields correspond to the layer-two header (e.g., L2/IP 302 in FIG. 3) and enable forwarding based on standard MAC addressing.

The fourth word includes VLAN-tagging fields. Bits 0 to 15 encode the TPID value of 0×8100 to indicate IEEE 802.1Q tagging. Bits 16 to 18 contain the outer priority code point (OPCP), bit 19 contains the outer canonical format indicator (OCFI), and bits 20 to 31 store the outer VLAN identifier (OVID). These fields ensure compatibility with VLAN-aware switching infrastructure.

In the fifth word, the EtherType field occupies bits 0 to 15 and may indicate a type such as FLEX HDR. However, in this example, no flexible header fields follow the EtherType. Instead, the payload begins directly at bit 16 and continues through the remaining fifth word and into subsequent words. Since the F bit (flow label presence), AR, TTL, DSCP, CNM, and other fields associated with the flexible header are not present, this format represents a reduced header structure. The sixth word encodes the CRC field.

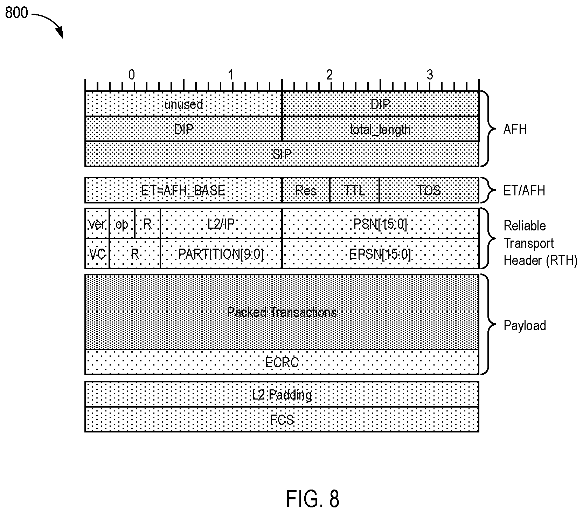

FIG. 8 is an example embodiment of an AI Fabric Header (AFH) format 800, according to some embodiments. The AFH provides a space-efficient representation that supports advanced fabric-level functions (e.g., congestion control, TTL-based forwarding) while reducing overall packet overhead. This enables optimized encapsulation of IPv4 packet fields within a Layer 2 Ethernet-compatible frame.

As shown in FIG. 8, the AFH format 800 includes multiple header portions aligned to 32-bit word boundaries. The first word includes unused bits and destination IP (DIP) information, while the second word contains the DIP and a total length field. The source IP (SIP) portion is embedded in the following word, with additional control bits and metadata fields encoded across the subsequent headers. For example, the ET=AFH_BASE field defines the EtherType identifying the format 800 as an AFH frame. This header includes a reserved (Res) field, a TTL field, and a TOS (Type of Service) field. The next protocol (e.g., RTH) follows, including further details for packet sequencing, virtual channels (VC), endpoint identifiers, XPU ID, PSN (Packet Sequence Number), EPSN (Expected PSN), partition ID, and operation codes. The remaining portion of the format 800 contains the packed transaction payload, end-to-end CRC (ECRC), optional L2 padding, and a frame checksum (FCS).

Table 2 below illustrates how selected fields from an IPv4 header may be mapped into the AFH format. Table 2 shows the original IPv4 field name, its original size in bits, the corresponding size in the AFH format, and its mapped location or encoding in the AFH. Fields that are omitted in the AFH representation are denoted with zeros in the "Mapped Size" column and/or blank entries in the "Mapping" column.

**Table 2**

| IPv4 Field Name | IPv4 Size | Mapped Size | Mapping |
|---|---|---|---|
| Version | 4 | 0 | |
| IHL | 4 | 0 | |
| Traffic Class | 8 | 8 | AFH.TOS |
| Total Length | 16 | 16 | SA[47:32] |
| Identification | 16 | 0 | |
| Flags | 3 | 0 | |
| Fragment Offset | 13 | 0 | |
| TTL | 8 | 4 | AFH.TTL - lower bits |
| Protocol | 8 | 0 | Implicit with AFH |
| Header Checksum | 16 | 0 | FCS+ECRC coverage |
| SIP | 32 | 10 | Source XPUID |
| DIP | 32 | 10 | Destination XPUID |
| RES | 0 | 4 | Reserved AFH fields, FH.RES |

As shown, this mapping compresses selected fields while eliminating unnecessary IPv4 components, resulting in reduced header overhead and improved forwarding efficiency. The system may use this format for AI fabrics that operate at L2 and bypass IP-layer processing, while still enabling per-hop TTL control, DSCP-based traffic differentiation, and congestion notification via the accompanying headers (e.g., CNM, ECN). The approach also allows the switch fabric to perform early header parsing and address masking for forwarding lookups based on the DIP.

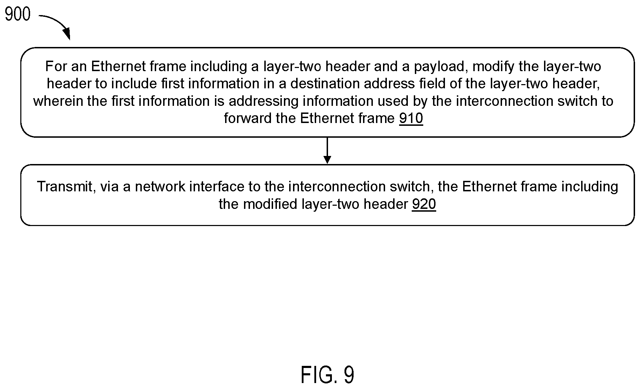

FIG. 9 is a flow diagram showing a process 900 for exchanging Ethernet frames (e.g., the frame 300) with an interconnection switch, according to some embodiments. In some embodiments, the process 900 is performed by one or more processors (e.g., the processor 121) of a device (e.g., the device 102, the network device 106, etc.). In other embodiments, the process 900 is performed by other entities. In some embodiments, the process 900 includes more, fewer, or different steps than shown in FIG. 9.

At step 910, the one or more processors may, for an Ethernet frame (e.g., the frame 300) including a layer-two header (e.g., L2/IP 302 in FIG. 3) and a payload (e.g., the packed transactions 306), modifying the layer-two header to include first information in a destination address field of the layer-two header. The first information may include addressing information used by the interconnection switch to forward the Ethernet frame.

At step 920, the one or more processor may transmit, via a network interface to the interconnection switch, the Ethernet frame including the modified layer-two header.

In some embodiments, the process 900 may include the one or more processors generating, as a portion of the Ethernet frame, a second header (e.g., the RTH 304) including one or more fields of an adaptive routing (AR) field indicating to the interconnection switch whether to perform an adaptive routing, a time-to-live (TTL) field indicating to the interconnection switch to perform a per-hop lifetime decrement, or an explicit congestion notification (ECN) field indicating capability relating to ECN.

In some embodiments, the second header may include a first field indicating eligibility of the Ethernet frame for congestion notification. In some embodiments, the second header may include a differentiated services code point (DSCP) field indicating a traffic class of the Ethernet frame. In some embodiments, the second header may include a congestion notification message (CNM) field indicating to the interconnection switch whether the Ethernet frame is a congestion notification message.

In some embodiments, the process 900 may include the one or more processors setting values to the first field, the DSCP field and the CNM field, indicating to the interconnection switch whether to send a CNM to a sender or a destination. In some embodiments, the DSCP field indicates to the interconnection switch to treat the DSCP field to be distinct from a DSCP field of an internet protocol header. In some embodiments, the second header may include a second field indicating whether a flow label field is present. In some embodiments, the process 900 may include the one or more processors adding, to the second header, a flow label field indicates to the interconnection switch to select a route based on a value set in the flow label field, and setting the second field to a value indicating that the flow label field is present.

As discussed herein, the present disclosure provides techniques for generating and transmitting Ethernet frames (e.g., the frame 300) that include an enhanced, layer-two-compatible header format tailored for AI-scale interconnection networks. In some examples, these techniques include constructing a second header containing fields such as adaptive routing (AR), time-to-live (TTL), congestion notification indicators (C, CNM), differentiated services code point (DSCP), and optional flow labels. The second header may be encoded immediately following the EtherType field as part of a compact flexible header (e.g., 2-byte or 3-byte variants) that is compatible with existing Ethernet transport structures, including optional VLAN tagging. The flexible header enables switches to perform advanced routing, congestion management, and traffic classification without requiring deep packet inspection or modification of upper-layer protocols.

By incorporating routing and congestion control metadata directly into the layer-two portion of the Ethernet frame, the described system facilitates scalable and efficient data transport across large AI/GPU cluster fabrics. In particular, these techniques support per-hop routing decisions, entropy-based load balancing, and fine-grained congestion signaling using in-band mechanisms. The disclosed flexible header may be added, interpreted, or modified by ELSIP components, interconnection switches, or endpoints, and may coexist with standard Ethernet frames on the same physical interface. These may be deployed in systems relying on low-latency switching, adaptive traffic control, or high-throughput communication, such as those used in machine learning training clusters, cloud-scale computing, and high-performance data center networks.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. Circuitry for exchanging Ethernet frames with an interconnection switch, wherein the circuitry is configured to:
for an Ethernet frame including a layer-two header and a payload, modify the layer-two header to include first information in a destination address field of the layer-two header, wherein the first information is addressing information used by the interconnection switch to forward the Ethernet frame; and
transmit, to the interconnection switch, the Ethernet frame including the modified layer-two header.

2. The circuitry of claim 1, wherein the circuitry is configured to:
generate, as a portion of the Ethernet frame, a second header comprising one or more fields of an adaptive routing (AR) field indicating to the interconnection switch whether to perform an adaptive routing, a time-to-live (TTL) field indicating to the interconnection switch to perform a per-hop lifetime decrement, or an explicit congestion notification (ECN) field indicating capability relating to ECN.

3. The circuitry of claim 2, wherein the second header further comprises:
a first field indicating eligibility of the Ethernet frame for congestion notification;
a differentiated services code point (DSCP) field indicating a traffic class of the Ethernet frame; and
a congestion notification message (CNM) field indicating to the interconnection switch whether the Ethernet frame is a congestion notification message.

4. The circuitry of claim 3, wherein the circuitry is configured
to set values to the first field, the DSCP field and the CNM field, indicating to the interconnection switch whether to send a CNM to a sender or a destination.

5. The circuitry of claim 3 or 4, wherein
the DSCP field indicates to the interconnection switch to treat the DSCP field to be distinct from a DSCP field of an internet protocol header.

6. The circuitry of any one of the claims 2 to 5, wherein
the second header comprises a second field indicating whether a flow label field is present, and the flow label field indicates to the interconnection switch to select a route based on a value set in the flow label field.

7. The circuitry of claim 6, wherein the circuitry is configured to:
add, to the second header, a flow label field, and
set the second field to a value indicating that the flow label field is present.

8. A device comprising:
a network interface configured to exchange Ethernet frames with an interconnection switch; and
circuitry as set forth in any one of the preceding claims and coupled to the network interface.

9. A method for exchanging Ethernet frames with an interconnection switch, the method comprising:
for an Ethernet frame including a layer-two header and a payload, modifying the layer-two header to include first information in a destination address field of the layer-two header, wherein the first information is addressing information used by the interconnection switch to forward the Ethernet frame; and
transmitting, via a network interface to the interconnection switch, the Ethernet frame including the modified layer-two header.

10. The method of claim 9, further comprising:
generating, as a portion of the Ethernet frame, a second header comprising one or more fields of an adaptive routing (AR) field indicating to the interconnection switch whether to perform an adaptive routing, a time-to-live (TTL) field indicating to the interconnection switch to perform a per-hop lifetime decrement, or an explicit congestion notification (ECN) field indicating capability relating to ECN.

11. The method of claim 10, wherein the second header further comprises:
a first field indicating eligibility of the Ethernet frame for congestion notification;
a differentiated services code point (DSCP) field indicating a traffic class of the Ethernet frame; and
a congestion notification message (CNM) field indicating to the interconnection switch whether the Ethernet frame is a congestion notification message.

12. The method of claim 11, further comprising:
setting values to the first field, the DSCP field and the CNM field, indicating to the interconnection switch whether to send a CNM to a sender or a destination.

13. The method of claim 11 or 12, wherein
the DSCP field indicates to the interconnection switch to treat the DSCP field to be distinct from a DSCP field of an internet protocol header.

14. The method of any one of the claims 9 to 13, wherein the second header comprises a second field indicating whether a flow label field is present, and the method further comprises:
adding, to the second header, a flow label field indicates to the interconnection switch to select a route based on a value set in the flow label field, and
setting the second field to a value indicating that the flow label field is present.
